# FASCICULE DE BREVET EUROPEEN

(11) **EP 2 689 834 B1**
(45) Date de publication et mention de la délivrance du brevet: **07.01.2015**
(21) Numéro de dépôt: 13305936.0
(22) Date de dépôt: 01.07.2013
(51) Int. Cl.: B01J 8/12, B01J 23/96, C10G 35/12

(54) **Réacteur de régénération en continu de catalyseur avec caisson de mélange de gaz et de distribution de gaz dans la zone d'oxychloration.**
Reaktor zur kontinuierlichen Regeneration eines Katalysators mit Gasmischungs- und Gasverteilungsgehäuse in der Oxychlorierungszone
Continuous catalyst-regeneration reactor with box for mixing gas and distributing gas in the oxychlorination area

(30) Priorité: 25.07.2012 FR 1202110
(43) Date de publication de la demande: 29.01.2014
(73) Titulaire: AXENS, 92508 Rueil Malmaison Cedex (FR)
(72) Inventeur: DECOODT, Xavier, 78420 CARRIERES S/SEINE (FR); PLAIS, Cecile, 69420 LES HAIES (FR); BAZER-BACHI, Frederic, 69540 IRIGNY (FR)
(74) Mandataire: Schmitt, Nicolas A.J.

(56) Documents cités:
- EP-A1- 0 872 277
- US-A- 3 132 092
- US-B2- 7 985 381

## Description

La présente invention concerne le domaine de la conversion d'hydrocarbures, et plus spécifiquement du reformage de charges hydrocarbonées en présence d'un catalyseur en lit mobile pour produire des coupes essences. La présente invention propose un réacteur de régénération de catalyseur avec un caisson dans lequel sont disposés des passage de gaz pour mélanger les gaz de calcination et d'oxychloration et pour distribuer le gaz résultant dans la zone d'oxychloration du catalyseur.

Les procédés de reformage catalytique des essences fonctionnant en lit mobile mettent généralement en oeuvre une zone réactionnelle pouvant comporter trois ou quatre réacteurs en série et une zone de régénération du catalyseur qui met en oeuvre un certain nombre d'étapes, en général une étape de combustion, une étape d'oxychloration, suivi d'une étape de calcination et une étape de réduction. Le document US 3,761,390 décrit un exemple de réalisation d'un procédé de reformage catalytique fonctionnant en lit mobile.

Le document US 7,985,381 décrit en détail un réacteur de régénération comportant une zone de combustion, une zone d'oxychloration, et une zone de calcination. Le catalyseur circule selon une direction verticale descendante dans le réacteur. Il passe de la zone d'oxychloration à la zone de calcination via une couronne annulaire. Un gaz de calcination injecté en fond de la zone de calcination traverse à contre-courant le lit de catalyseur dans la zone de calcination puis est récupéré dans une seconde zone annulaire située en périphérie du réacteur. Dans cette seconde zone annulaire, le gaz d'oxychloration est injecté pour être mélangé avec le gaz de calcination qui a été récupéré. Le mélange de gaz est alors injecté à la périphérie du réacteur en fond de la zone d'oxychloration.

L'injection de ce mélange gaz en périphérie du réacteur a pour inconvénient de générer un profil de vitesse du gaz non homogène en sortie de la zone d'injection sur la section de la zone d'oxychloration. De plus, le passage du catalyseur de la zone d'oxychloration à la zone de calcination via une couronne annulaire est encombrant dans le réacteur et générateur de pertes de charge. Néanmoins, les pertes de charge ne sont pas suffisantes pour éviter que du gaz de calcination remonte directement via les jambes de descente du catalyseur, sans passer dans la couronne annulaire extérieure et donc sans être mélangé au gaz de calcination.

La présente invention propose d'optimiser la distribution du mélange de gaz injecté dans la zone d'oxychloration au moyen d'un caisson qui permet notamment d'optimiser le mélange de gaz et de distribuer le mélange de gaz de manière homogène sur la section du réacteur.

De manière générale, la présente invention concerne un réacteur de régénération en continu de grains de catalyseur composé d'une enceinte comportant une zone d'oxychloration superposée à une zone de calcination munie d'un conduit d'introduction de gaz de calcination, **caractérisé en ce qu'**un caisson est disposé entre la zone d'oxychloration et la zone de calcination, le caisson étant composé d'un espace interne situé entre deux plateaux étanches au gaz et aux grains de catalyseur, le caisson étant traversé par une pluralité de tubes permettant le passage de grains de catalyseur de la zone d'oxychloration dans la zone de calcination, le caisson étant traversé par une pluralité de moyens de passage de gaz de la zone de calcination à la zone d'oxychloration, le réacteur comportant au moins un conduit d'injection de gaz d'oxychloration débouchant dans l'espace interne du caisson, chaque moyen de passage de gaz comportant au moins un orifice communiquant avec l'espace interne du caisson, chaque moyen de passage de gaz comportant un moyen d'évacuation de gaz dans la zone d'oxychloration, le moyen d'évacuation de gaz étant perméable au gaz et imperméable aux grains de catalyseur.

Selon l'invention, chaque moyen d'évacuation de gaz peut être choisi parmi un bubble cap, une plaque perforée, une grille.

Par exemple, chaque moyen d'évacuation de gaz est composé d'une grille tubulaire verticale, l'extrémité inférieure de la grille tubulaire communiquant avec la zone de mélange, l'extrémité supérieure de la grille étant obturée par un toit. Le toit peut être un cône dont le sommet est dirigé vers le haut.

Le conduit d'injection de gaz d'oxychloration peut déboucher au milieu de l'espace interne du caisson. Alternativement, le conduit d'injection de gaz d'oxychloration peut déboucher dans l'espace interne du caisson à la paroi de l'enceinte du réacteur.

L'orifice peut être percé selon une direction dirigée vers le haut et formant un angle compris entre 0 et 80° par rapport à une direction horizontale, préférentiellement entre 0 et 60° par rapport à une direction horizontale.

Au moins une partie des tubes et des moyens de passage de gaz peuvent être solidaires des deux plateaux.

L'invention concerne également l'utilisation du réacteur selon l'invention dans un procédé de reformage catalytique d'une charge d'hydrocarbures, dans lequel
- on introduit un flux de grains de catalyseur en tête de la zone d'oxychloration,
- on introduit un flux de gaz de calcination par le conduit d'introduction de gaz de calcination,
- on introduit un flux de gaz de d'oxychloration par le conduit d'injection de gaz d'oxychloration,
- on évacue un flux de gaz en tête de la zone d'oxychloration,
- on évacue un flux de grains de catalyseur en fond de la zone de calcination.

Les grains de catalyseur peuvent comporter du platine déposé sur un support poreux, le flux de gaz de calcination peut comporter de l'air ou air appauvri et peut être à une température comprise entre 400°C et 550°C, le flux de gaz d'oxychloration peut comporter un composé chloré et peut être à une température comprise entre 350°C et 550°C.

Selon l'invention, on peut effectuer un remodelage d'un réacteur existant en remplaçant l'ancien système d'injection de gaz d'oxychloration par ladite zone de mélange.

Selon l'invention, le fait de mélanger le gaz de calcination avec le gaz d'oxychloration dans le caisson dépourvu de grain de catalyseur, permet d'obtenir un bon mélange de gaz.

De plus, la multiplication des points d'injection de gaz par les orifices sur la section du réacteur permet une excellente distribution du mélange de gaz sur toute la section du réacteur, dès la sortie du caisson.

En outre, le caisson mis en oeuvre selon l'invention présente l'avantage d'être compact et d'assurer une excellente tenue mécanique du fait de sa structure.

Par ailleurs, le passage des grains de catalyseur de la zone d'oxychloration à la zone de calcination via des tubes permet de minimiser le passage de gaz directement de la zone de calcination à la zone d'oxychloration sans passer par les zones de mélange du caisson, du fait de la faible section de passage potentielle pour le gaz.

En outre, la présente invention peut être facilement mise en oeuvre dans des installations existantes. En particulier, la présente invention peut remplacer avantageusement un dispositif d'injection de gaz d'oxychloration, afin d'en améliorer les performances de mélange et de distribution.

D'autres caractéristiques et avantages de l'invention seront mieux compris et apparaîtront clairement à la lecture de la description faite ci-après en se référant aux dessins parmi lesquels :
- la figure 1 représente un réacteur de régénération de catalyseur,
- la figure 2 représente un mode de réalisation du caisson selon l'invention,
- la figure 3 représente en perspective le caisson schématisé par la figure 2,
- la figure 4 représente en détail un mode de réalisation d'un moyen d'évacuation de gaz, du caisson selon l'invention,
- la figure 5 représente un détail du caisson selon l'invention.

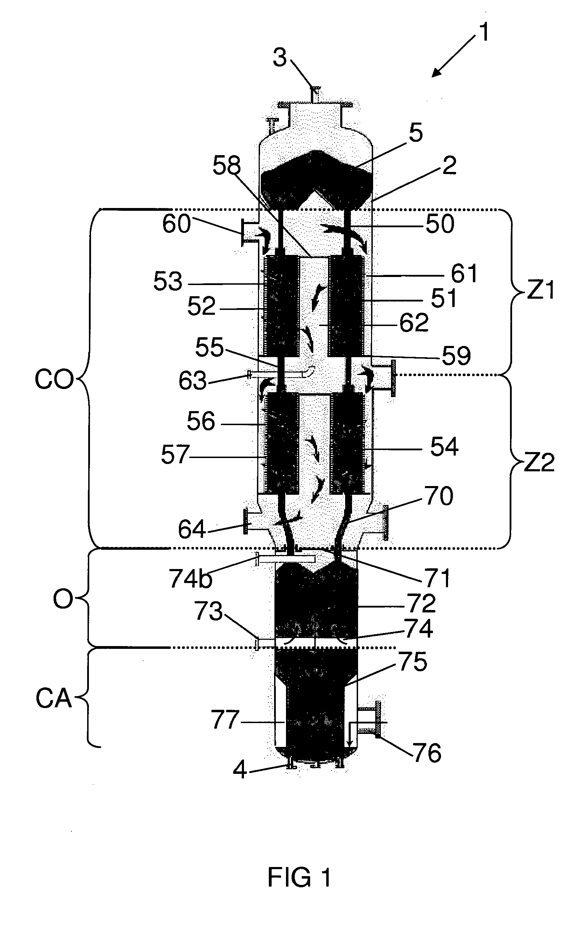

Sur la figure 1, le réacteur de régénération de catalyseur est composé d'une enceinte 2 renfermant une zone de combustion CO, une zone d'oxychloration O et une zone de calcination CA. L'enceinte 2 peut être en forme de cylindre d'axe vertical, le cylindre étant fermé à ses extrémités. Les zones de combustion, d'oxychloration et de calcination sont superposées dans le réacteur 1. Dans le réacteur 1, ces zones peuvent être de même diamètre ou de diamètres différents.

Le catalyseur à régénérer est introduit en tête du réacteur 1 par le ou les conduits 3 et est évacué du réacteur 1 par les conduits 4 situés en fond du réacteur 1. Sous l'effet de la gravité, le catalyseur circule de haut en bas dans le réacteur en traversant successivement les zones de combustion CO, d'oxychloration O et de calcination CA. Le catalyseur est évacué du réacteur 1 en fond de la zone de calcination CA par les conduits 4. Le réacteur 1 est alimenté en continu en catalyseur et le catalyseur circule en continu dans le réacteur 1.

Le catalyseur est sous forme de grain solide, par exemple sous forme de bille ayant entre 0,5 et 20 mm de diamètre afin de faciliter la circulation du catalyseur dans le réacteur 1. Les grains de catalyseur sont composés d'un support poreux, par exemple une alumine, sur lequel a été déposé différents composés, notamment du platine et du chlore, et éventuellement de l'étain, du rhénium, de l'indium et/ou du phosphore. Le catalyseur à régénérer comporte du coke, par exemple environ 5% poids de coke.

Le catalyseur introduit par le conduit 3 dans le réacteur 1 arrive dans un réservoir 5 muni d'une trémie qui permet d'alimenter la zone de combustion CO en catalyseur.

La zone de combustion CO a pour but de réaliser la combustion du coke déposé sur le catalyseur. La zone CO peut comporter un ou plusieurs étages. Le réacteur 1 de la figure 1 comporte deux étages Z1 et Z2. Selon un mode de réalisation particulier, la zone de combustion peut comporter en outre une zone de contrôle de combustion, par exemple telle que décrite par le document FR 2761907. Le catalyseur du réservoir 5 est introduit dans un espace annulaire 51 de l'étage Z1 via les conduits d'alimentation 50. L'espace annulaire 51 est délimité par deux grilles tubulaires 52 et 53, par exemple cylindriques et concentriques. L'espace 61 situé entre la grille tubulaire 53 et l'enceinte 2 est obturé à son extrémité inférieure par la plaque 59. L'espace 61 peut être arrangé sous forme de portion couramment nommée "scallops". L'espace central 62 situé à l'intérieur de la grille tubulaire 52 est obturé à son extrémité supérieure par la plaque 58. Le catalyseur de l'espace annulaire 51 est introduit dans un espace annulaire 54 de l'étage Z2 via les conduits d'alimentation 55. L'espace 54 est délimité par deux grilles tubulaires 56 et 57, par exemple cylindriques est concentriques. Les grilles 52, 53, 56 et 57 permettent de retenir le catalyseur tout en autorisant le passage du gaz. Par exemples les grilles 52, 53, 56 et 57 peuvent être des grilles Johnson et/ou des plaques perforées.

Un premier flux de gaz de combustion contenant de l'oxygène est introduit dans l'enceinte 2 en tête de l'étage Z1 par l'orifice 60. Dans l'étage Z1, le flux de gaz circule selon les flèches indiquées sur la figure 1 en traversant le lit de catalyseur contenu dans l'espace annulaire 51. En effet, les plaques étanches 58 et 59 obligent le gaz de combustion arrivant par l'orifice 60 à passer de l'espace 61 en périphérie de l'espace annulaire 51 à l'espace central 62 situé à l'intérieur de la grille 52 en traversant le catalyseur dans l'espace annulaire 51. Un deuxième flux de gaz de combustion contenant de l'oxygène est introduit entre l'étage Z1 et Z2 par le conduit 63. Ce deuxième flux se mélange au premier flux de gaz ayant traversé l'étage Z1. De la même façon que pour l'étage Z2, le gaz de combustion traverse le lit de catalyseur contenu dans l'espace annulaire 54, selon les flèches indiquées sur la figure 1. Après avoir traversé le catalyseur de la zone 54, le gaz de combustion est évacué de l'étage Z2 par le conduit 64.

Selon un autre mode de réalisation, la zone de combustion CO peut être arrangée de manière à ce que le gaz de combustion circule de l'intérieur vers l'extérieur dans les espaces annulaires 51 et 54. De plus, alternativement, selon un autre mode de réalisation, la zone de combustion peut être arrangée de manière à ce que le mouvement du gaz soit injecté en fond de la zone CO et soit évacué en tête de la zone CO.

Le catalyseur dans la zone annulaire 54 de la zone de combustion s'écoule de la zone de combustion CO dans la zone d'oxychloration O via les conduits 70. La plaque 71 disposée entre la zone combustion et la zone d'oxychloration O est étanche au gaz pour éviter la circulation de gaz entre ces deux zones.

La zone d'oxychloration O a notamment pour but de recharger les grains de catalyseur en chlore et re-disperser le platine à sa surface afin d'améliorer la répartition du platine dans les grains de catalyseur. Dans la zone d'oxychloration O, le catalyseur s'écoule dans l'espace 72 interne au réacteur, par exemple l'espace cylindrique défini par les parois de l'enceinte 2 du réacteur. Le fond de l'espace 72 de la zone d'oxychloration O est muni du conduit 73 qui permet d'injecter le gaz d'oxychloration dans la zone d'oxychloration. Le gaz d'oxychloration comporte un composé chloré et peut être à une température comprise entre 350°C et 550°C, de préférence entre 460°C et 530°C. En tête de l'espace 72, le conduit 74b permet d'évacuer du gaz de la zone d'oxychloration O. Le gaz d'oxychloration injecté par le conduit 73 circule selon une direction ascendante à travers l'espace 72, à contre-courant de l'écoulement gravitaire du catalyseur. Puis le gaz ayant traversé l'espace 72 est évacué de l'enceinte 2 par le conduit 74b.

Le catalyseur arrivant en fond de la zone d'oxychloration O continue de s'écouler de l'espace 72 à l'espace 75 de la zone de calcination CA. La zone de calcination a notamment pour but de sécher les grains de catalyseur. Le fond de la zone de calcination CA est muni du conduit 76 qui permet d'injecter le gaz de calcination en fond de l'espace 75. Le gaz de calcination comporte de l'air ou de l'air appauvri en oxygène et peut être à une température comprise entre 400°C et 550°C. Afin de distribuer de manière homogène le gaz de calcination dans l'espace 75, le conduit 76 peut déboucher dans un espace annulaire 77 disposé en périphérie, entre l'espace 75 et l'enceinte 2. L'espace annulaire 77 est ouvert dans sa partie basse située en fond de l'espace 75 de la zone de calcination CA. Ainsi le gaz injecté par le conduit 76 est distribué dans le lit de catalyseur sur toute la périphérie en fond de l'espace 75. Le gaz de calcination injecté par le conduit 76 circule selon une direction ascendante, à contre-courant de l'écoulement gravitaire du catalyseur, à travers l'espace 75, puis à travers l'espace 72. Lorsque le gaz calciné passe de l'espace 75 à l'espace 72, il rencontre et se mélange au gaz d'oxychloration injecté par le conduit 73. Puis le gaz ayant traversé l'espace 72 est évacué de l'enceinte 2 par le conduit 74b.

Selon l'invention, on dispose une zone de mélange 74 entre l'espace 72 et l'espace 75. La zone de mélange 74 comporte un caisson conçu afin d'effectuer un mélange homogène du gaz de calcination avec le gaz d'oxychloration et de distribuer de manière homogène le mélange de gaz sur toute la section de l'espace 72.

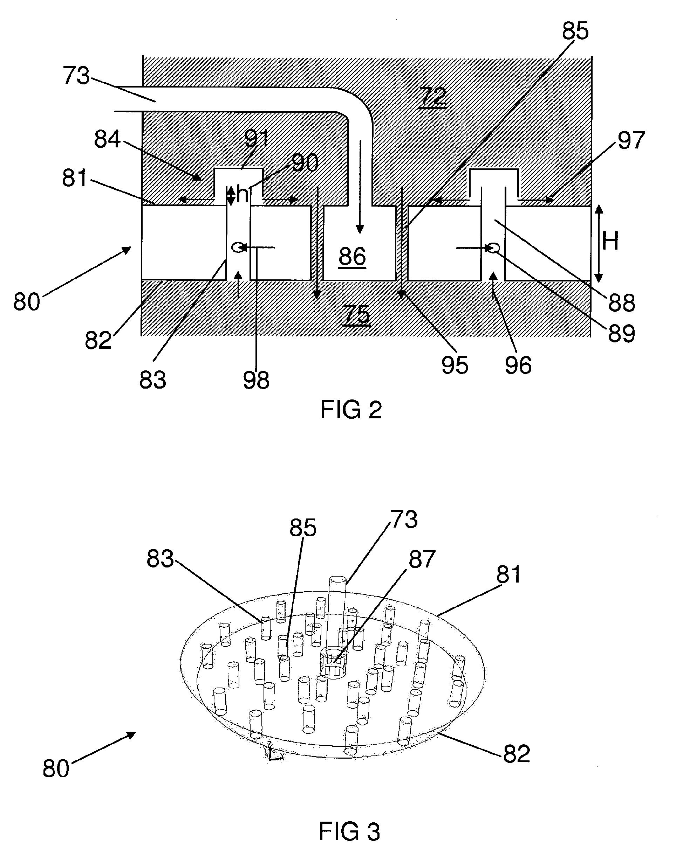

La zone de mélange 74 est décrite en détail en référence aux figures 2 et 3. Les références des figures 2 et 3 identiques à celles de la figure 1 désignent les mêmes éléments.

En référence aux figures 2 et 3, la zone de mélange est composée d'un caisson 80 positionné entre l'espace 72 de la zone d'oxychloration et l'espace 75 de la zone de calcination. Le caisson 80 s'étend sur toute la section de l'enceinte 2, selon un plan sensiblement horizontal. Le caisson 80 est composé de deux plateaux 81 et 82, qui sont de préférence horizontaux et qui s'étendent chacun sur la section de l'enceinte 2. Les deux plateaux sont espacés d'une hauteur H pour former un espace interne 86. La hauteur H peut varier entre 50 mm et 500 mm. Chacun des plateaux 81 et 82 est une plaque étanche au gaz et ne laissant pas passer les grains de catalyseur. Par exemple, les plateaux 81 et 82 sont chacun, un disque plein de section égale à la section interne de l'enceinte 2. Les plateaux 81 et 82 peuvent être de sections différentes. Alternativement, le plateau 81 peut être ondulé, par exemple en formant des cônes ou des entonnoirs autour des tubes 85 décrits ci-après.

Le caisson 80 est traversé par plusieurs tubes 85 qui permettent l'écoulement des grains de catalyseur depuis l'espace 72 de la zone d'oxychloration jusque dans l'espace 75 de la zone de calcination. Les tubes 85 s'étendent du plateau 81 au plateau 82 sur la hauteur H. Le nombre, la position, la section et/ou la hauteur H des tubes 85 sont déterminés pour assurer le passage du débit de catalyseur de l'espace 72 à l'espace 75. Par exemple, la section cumulée des tubes 85 est de préférence égale ou supérieure à la section des conduits 4 de vidange du catalyseur en fond du réacteur 1, les sections étant mesurées selon une coupe horizontale. Les tubes 85 peuvent être sensiblement verticaux. Par exemple, les axes des tubes 85 forment un angle compris entre 0° et 30° par rapport à la direction verticale. Par exemple, les tubes 85 peuvent être des tubes cylindriques de diamètre variant entre 1" (25,4 mm) et 4" (101,6 mm) et de hauteur H variant entre 50 mm et 500 mm. Le passage des grains de catalyseur de la zone d'oxychloration à la zone de calcination via des tubes 85, dont la section cumulée est relativement faible, permet de minimiser le passage de gaz directement à travers ces tubes 85. Les paramètres de dimensionnement des tubes 85 peuvent, de plus, être déterminés pour minimiser la quantité de gaz de calcination remontant de l'espace 75 vers l'espace 72 à travers les tubes 85. Pour ce faire, le nombre total de tubes peut être compris entre 1 et 20, de préférence entre 4 et 20, voire de préférence entre 4 et 16, le diamètre minimal des tubes étant déterminé pour éviter le blocage des grains de catalyseur dans les tubes. Par ailleurs, le ratio entre la section cumulée des tubes 85 et la surface du plateau 81 peut être comprise entre 0,1 et 5%, de préférence entre 0,5 et 2%, la section cumulée et la surface du plateau 81 étant mesurées selon un plan horizontal.

De plus, le caisson est traversé par des moyens de passage de gaz 83 pour assurer la circulation du gaz de calcination de l'espace 75 de la zone de calcination à l'espace 72 de la zone d'oxychloration. Les moyens de passage de gaz 83 peuvent être composés d'une pluralité de tubes s'étendant du plateau 82 au plateau 81 sur la hauteur H. Le nombre, la position, la section et/ou la hauteur H des tubes 83 sont déterminés pour assurer le passage du débit de gaz de calcination de l'espace 75 à l'espace 72. Les tubes 83 peuvent être sensiblement verticaux. Par exemple, les axes des tubes 83 forment un angle compris entre 0° et 30° par rapport à la direction verticale. Par exemple, les tubes 83 peuvent être des tubes cylindriques de diamètre variant entre 0,5" (12,7 mm) et 4" (101,6 mm) et de hauteur H variant entre 50 mm et 500 mm, de préférence entre 100 mm et 400 mm.

La tenue mécanique du plateau 80 peut être renforcée en solidarisant au moins une partie des tubes 85 et 83, d'une part, au plateau 81 et, d'autre part, au plateau 82.

Les moyens de passage de gaz 83 comportent dans leur partie supérieure un moyen d'évacuation de gaz 84 pour distribuer le gaz dans l'espace 72 de la zone d'oxychloration. Les orifices sont dimensionnés pour autoriser le passage de gaz tout en évitant le passage de grains de catalyseur. Les moyens d'évacuation de gaz 84, et donc les moyens de passage de gaz 83 sont répartis sur la surface du plateau 81, par exemple de manière uniforme et permettent de distribuer le mélange de gaz de manière uniforme sur la section de l'espace 72 de la zone d'oxychloration. La multiplication des points d'injection de gaz par les moyens 84 sur la section du réacteur permet une excellente distribution du mélange de gaz sur toute la section du réacteur, distribution qui peut être plus rapide que par rapport à une entrée en couronne extérieure telle que présentée par le document US 7,985,381. Par exemple les moyens d'évacuation de gaz 84 peuvent être disposés de manière à ce que la distance séparant deux moyens 84 soit comprise entre 50 et 400 mm, de préférence entre 100 et 300 mm. Bien entendu, les moyens de passage de gaz 83 associés aux moyens d'évacuation de gaz 84 sont positionnés sur le plateau 81 à des emplacements distincts des tubes 85.

Par exemple, les moyens d'évacuation de gaz 84 peuvent être composés d'une grille, d'un dispositif couramment nommé "bubble cap" ou de tout autre système autorisant le passage du gaz et mais pas des grains de catalyseur.

Par exemple, on peut mettre les moyens d'évacuation de gaz 84 de type "bubble cap" schématisé sur la figure 2. L'orifice "bubble cap" est composé d'une cheminée verticale 90 recouvert par un chapeau 91. La cheminée 90 est un tube traversant le plateau 81 et s'étendant au-dessus du plateau 81. Le chapeau 91 peut être en forme de dôme, de cône ou cylindrique et recouvre au moins toute la section de la cheminée 90. Le chapeau 91 est disposé par rapport à la cheminée 90 de manière à ce que l'extrémité basse du chapeau 91 soit plus basse que l'extrémité supérieure de la cheminée 90 afin d'éviter que des grains de catalyseur passent à travers la cheminée 90. Par exemple, l'extrémité supérieure de la cheminée 90 dépasse d'au moins une hauteur h l'extrémité inférieure du chapeau 91. De plus, le chapeau 91 peut atteindre le plateau 81, des orifices ou créneaux étant alors creusés aux extrémités du chapeau afin de permettre le passage du gaz.

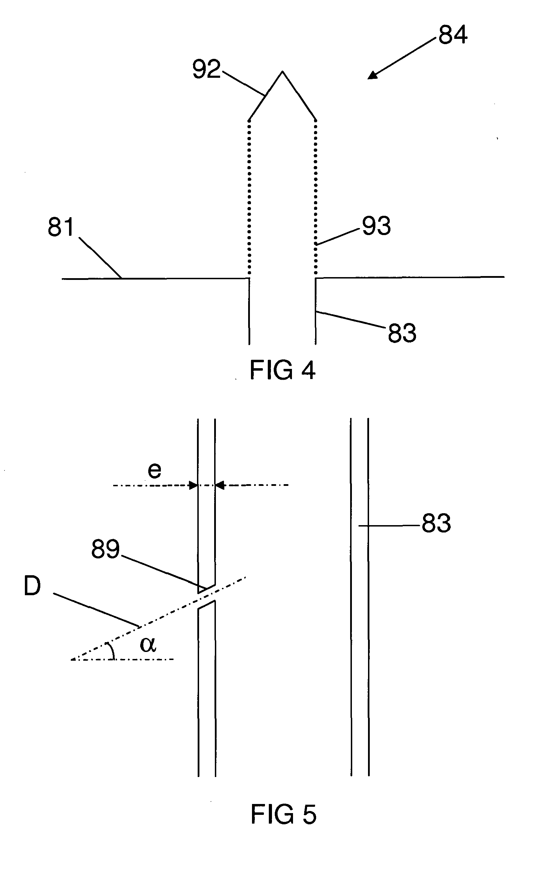

Par exemple, on peut mettre en oeuvre le moyen d'injection de gaz 84 schématisé par la figure 4. Les références de la figure 4 identiques à celle de la figure 2 désignent les mêmes éléments. En référence à la figure 4, le moyen d'injection de gaz 84 est composé d'un cylindre 93 en grille, par exemple une grille Johnson, recouvert par un toit 92 en plaque pleine. L'extrémité inférieure du cylindre 93 communique avec le moyen de passage de gaz 83, tandis que l'extrémité supérieure du cylindre 93 est obturée par la plaque 92 qui forme un toit. Le cylindre 93 s'étend selon un axe vertical pour favoriser l'écoulement des grains de catalyseur le long de la grille et pour éviter le blocage et le dépôt de brisures, également nommées "fines", de catalyseur contre la grille. Le toit 92 peut être en forme de cône afin de dévier l'écoulement du catalyseur autour de la grille 84. Par exemple le diamètre des cylindres 93 peut être compris entre 0,5" (12,7 mm) et 5" (127 mm), de préférence entre 0,5 (12,7 mm) et 3" (76,2 mm) et la hauteur des cylindres 84 peut être comprise entre 50 et 400 mm, de préférence entre 80 et 250 mm.

Les conduits traversant l'enceinte 2 permettent d'introduire le gaz d'oxychloration dans l'espace interne 86 du caisson 80. Le conduit 73 peut être agencé pour déboucher au milieu de l'espace interne 86 du caisson 80. Par exemple, le conduit 73 peut passer au-dessus, au-dessous ou à travers du caisson 80. Cette configuration permet d'injecter le gaz d'oxychloration au milieu du caisson 80 afin qu'il puisse se répartir de manière homogène dans tout l'espace interne 86.

Selon un autre mode de réalisation particulier, le gaz d'oxychloration peut également être injecté en paroi de l'enceinte 2, directement dans l'espace 86. Ainsi le conduit 73 constitue une arrivée latérale de gaz dans l'espace 86, c'est-à-dire que le conduit 73 peut traverser sensiblement horizontalement l'enceinte 2 pour déboucher dans l'espace 86.

Selon un autre mode de réalisation particulier, plusieurs conduits 73 peuvent être utilisés.

En référence à la figure 3, l'extrémité du conduit 73 qui débouche dans l'espace 86 est munie d'un distributeur de gaz 87 pour diffuser le gaz dans toutes les directions dans l'espace interne 86. Par exemple, le distributeur 87 peut être un cylindre vertical qui s'étend depuis le plateau 82 jusqu'au plateau 81, le cylindre comportant des orifices ou des fenêtres pour diffuser le gaz du conduit 73 dans l'espace interne 86. Le distributeur 87 peut également avoir une taille inférieure à la distance H. Sans sortir du cadre de la présente invention, on peut mettre en oeuvre tout type de distributeur.

Alternativement, le gaz d'oxychloration peut directement sortir du conduit 73 lorsqu'il rentre dans l'espace 86, sans nécessairement passer à travers un distributeur.

De plus, en référence à la figure 2, chacun des moyens de passage de gaz 83 comportent un ou plusieurs orifices 89, de préférence entre 1 et 10, voire entre 1 et 5 orifices. Le ou les orifices 89 établissent une communication entre l'espace interne 86 du caisson 80 et l'espace de mélange 88 situé à l'intérieur du moyen de passage de gaz 83. Ainsi le gaz d'oxychloration injecté dans l'espace interne 86 par le conduit 73 s'écoule dans l'espace de mélange 88 de chacun des moyens de passage de gaz 83 en étant mélangé au gaz de calcination circulant dans les moyens de passage de gaz 83. Le mélange de gaz ainsi obtenu est évacué par les moyens d'évacuation de gaz 84. On peut déterminer la pression du gaz d'oxychloration dans l'espace interne 86 pour assurer le mélange entre le gaz d'oxychloration et le gaz de calcination dans l'espace de mélange 88. De préférence, la pression dans l'espace interne 86 est supérieure à la pression dans l'espace de mélange 88 pour éviter que le gaz de calcination circulant dans les moyens de passage de gaz 83 entre dans l'espace interne 86 du caisson. Par exemple la surface des orifices peut être comprise entre 7 mm² et 320 mm², ce qui correspond dans le cas d'orifices circulaires à des trous circulaires de diamètre compris entre 3 mm et 20 mm. La figure 5 représente en détail un moyen de passage de gaz 83 formé d'un tube d'épaisseur e et comportant un orifice 89. Pour améliorer le mélange de gaz, les orifices 89 peuvent être percés à travers la paroi du moyen de passage de gaz 83 selon une direction D dirigée vers le haut et formant un angle α compris entre 0° et 80° par rapport à l'horizontale, de préférence entre 0° et 60°, varie entre 10° et 60°. Par ailleurs, pour homogénéiser le débit de gaz circulant à travers chaque orifices 89, chacun des orifices 89 peuvent être disposés sur une portion du moyen de passage de gaz située à l'opposé de la position de l'arrivée du conduit 73 dans l'espace interne 86.

Le fonctionnement de la zone de mélange selon l'invention est décrit en référence à la figure 2. Sur la figure 2, l'espace occupé par le catalyseur est représenté en surface hachurée. Les grains de catalyseur s'écoulent de l'espace 72 dans l'espace 75 via les tubes 85 selon la direction des flèches 95. Le gaz de calcination circulant dans l'espace 75 est canalisé selon les flèches 96 par les moyens de passage de gaz 83 pour passer de l'espace 75 à l'espace 72. Le gaz d'oxychloration est injecté dans l'espace interne 86 du caisson 80 par le conduit 73. Le gaz d'oxychloration s'écoule de l'espace interne 86 dans l'espace de mélange 88 des moyens 83 de passage de gaz selon les flèches 98. Ainsi, le gaz de calcination circulant selon un courant ascendant dans les moyens 83 est mélangé au gaz d'oxychloration injecté via les orifices 89 dans l'espace de mélange 88. Le mélange de gaz est évacué par les moyens d'évacuation de gaz 84 selon les flèches référencées 97.

La simplicité du caisson 80 et les dimensions réduites du caisson 80, notamment le faible encombrement en hauteur par rapport à la taille du réacteur, permettent de mettre en oeuvre la zone de mélange selon l'invention dans le cadre d'un remodelage, couramment nommé "revamping", d'une installation. En effet, on peut installer le caisson 80 muni du conduit d'injection 73 en lieu et place d'un autre système dans un réacteur existant, par exemple un réacteur décrit par le document US 7,985,381.

Ainsi, le caisson 80 permet d'effectuer un mélange homogène entre du gaz de calcination avec le gaz d'oxychloration et la pluralité des moyens d'évacuation de gaz 84 répartis sur la section du réacteur permettent de distribuer ce mélange de gaz de manière homogène sur toute la section de la zone d'oxychloration.

## Revendications

1. Réacteur (1) de régénération en continu de grains de catalyseur composé d'une enceinte (2) comportant une zone d'oxychloration (72) superposée à une zone de calcination (75) munie d'un conduit d'introduction de gaz de calcination, **caractérisé en ce qu'**un caisson (80) est disposé entre la zone d'oxychloration et la zone de calcination, le caisson (80) étant composé d'un espace interne situé entre deux plateaux (81; 82) étanches au gaz et aux grains de catalyseur, le caisson (80) étant traversé par une pluralité de tubes (85) permettant le passage de grains de catalyseur de la zone d'oxychloration (72) dans la zone de calcination (75), le caisson (80) étant traversé par une pluralité de moyens (83) de passage de gaz de la zone de calcination à la zone d'oxychloration, le réacteur (1) comportant au moins un conduit (73) d'injection de gaz d'oxychloration débouchant dans l'espace interne (86) du caisson (80), chaque moyen (83) de passage de gaz comportant au moins un orifice (89) communiquant avec l'espace interne (86) du caisson (80), chaque moyen (83) de passage de gaz comportant un moyen (84) d'évacuation de gaz dans la zone d'oxychloration, le moyen d'évacuation (84) de gaz étant perméable au gaz et imperméable aux grains de catalyseur.

2. Réacteur selon la revendication 1, **caractérisé en ce que** chaque moyen d'évacuation de gaz est choisi parmi un bubble cap, une plaque perforée, une grille.

3. Réacteur selon la revendication 2, **caractérisé en ce que** chaque moyen d'évacuation de gaz est composé d'une grille tubulaire verticale, l'extrémité inférieure de la grille tubulaire communiquant avec la zone de mélange, l'extrémité supérieure de la grille étant obturée par un toit.

4. Réacteur selon la revendication 3, **caractérisé en ce que** le toit est un cône dont le sommet est dirigé vers le haut.

5. Réacteur selon l'une des revendications 1 à 4, **caractérisé en ce que** le conduit d'injection de gaz d'oxychloration débouche au milieu de l'espace interne du caisson.

6. Réacteur selon l'une des revendications 1 à 4, **caractérisé en ce que** le conduit d'injection de gaz d'oxychloration débouche dans l'espace interne du caisson à la paroi de l'enceinte du réacteur.

7. Réacteur selon l'une des revendications 1 à 6, **caractérisé en ce que** l'orifice est percé selon une direction dirigée vers le haut et formant un angle compris entre 0 et 80° par rapport à une direction horizontale, préférentiellement entre 0 et 60° par rapport à une direction horizontale.

8. Réacteur selon l'une des revendications 1 à 7, **caractérisé en ce que** au moins une partie des tubes et des moyens de passage de gaz sont solidaires des deux plateaux.

9. Utilisation du réacteur selon l'une des revendications précédentes dans un procédé de reformage catalytique d'une charge d'hydrocarbures, dans lequel
- on introduit un flux de grains de catalyseur en tête de la zone d'oxychloration,
- on introduit un flux de gaz de calcination par le conduit d'introduction de gaz de calcination,
- on introduit un flux de gaz de d'oxychloration par le conduit d'injection de gaz d'oxychloration,
- on évacue un flux de gaz en tête de la zone d'oxychloration,
- on évacue un flux de grains de catalyseur en fond de la zone de calcination.

10. Utilisation selon la revendication 9, dans lequel les grains de catalyseur comporte du platine déposé sur un support poreux, le flux de gaz de calcination comporte de l'air ou air appauvri et est à une température comprise entre 400°C et 550°C, le flux de gaz d'oxychloration comporte un composé chloré et est à une température comprise entre 350°C et 550°C.

11. Procédé pour obtenir un réacteur selon l'une des revendications 1 à 8, dans lequel on effectue un remodelage d'un réacteur existant en remplaçant l'ancien système d'injection de gaz d'oxychloration par ladite zone de mélange.

## Patentansprüche

1. Reaktor (1) zur kontinuierlichen Regeneration von Katalysatorkörnern, der zusammengesetzt ist aus einem Gehäuse (2), welches eine Oxychlorierungszone (72) umfasst, die einer Calcinierungszone (75) aufgesetzt ist, die mit einer Leitung zum Einführen von Calcinierungsgas versehen ist, **dadurch gekennzeichnet, dass** ein Reaktorbehälter (80) zwischen der Oxychlorierungszone und der Calcinierungszone angeordnet ist, wobei der Reaktorbehälter (80) aus einem Innenraum besteht, der sich zwischen zwei Platten (81; 82) befindet, die undurchlässig für Gas und Katalysatorkörner sind, wobei der Reaktorbehälter (80) von einer Vielzahl von Röhren (85) durchzogen ist, welche den Durchfluss von Katalysatorkörnern von der Oxychlorierungszone (72) in die Calcinierungszone (75) gestatten, wobei der Reaktorbehälter (80) von einer Vielzahl von Mitteln zum Durchfluss von Gas (83) aus der Calcinierungszone in die Oxychlorierungszone durchzogen ist, wobei der Reaktor (1) mindestens eine Leitung (73) zum Einspritzen von Oxychlorierungsgas umfasst, die in den Innenraum (86) des Reaktorbehälters (80) mündet, wobei jedes Mittel (83) zum Übergang von Gas mindestens eine Öffnung (89) umfasst, die mit dem Innenraum (86) des Reaktorbehälters (80) in Verbindung steht, wobei jedes Mittel (83) zum Durchfluss von Gas ein Mittel (84) zum Ausscheiden von Gas in die Oxychlorierungszone umfasst, wobei das Mittel (84) zum Ausscheiden von Gas für Gas durchlässig und für Katalysatorkörner undurchlässig ist.

2. Reaktor nach Anspruch 1, **dadurch gekennzeichnet, dass** jedes Mittel zum Ausscheiden von Gas ausgewählt ist aus einer Bubble Cap, einer perforierten Platte und einem Gitter.

3. Reaktor nach Anspruch 2, **dadurch gekennzeichnet, dass** jedes Mittel zum Ausscheiden von Gas zusammengesetzt ist aus einem vertikalen röhrenförmigen Gitter, wobei das innere Ende des röhrenförmigen Gitters mit der Mischzone in Verbindung steht, wobei das obere Ende des Gitters durch ein Dach verschlossen ist.

4. Reaktor nach Anspruch 3, **dadurch gekennzeichnet, dass** das Dach ein Kegel ist, dessen Spitze nach oben gerichtet ist.

5. Reaktor nach einem der Ansprüche 1 bis 4, **dadurch gekennzeichnet, dass** die Leitung zum Einführen von Oxychlorierungsgas in der Mitte des Innenraums des Reaktorbehälters mündet.

6. Reaktor nach einem der Ansprüche 1 bis 4, **dadurch gekennzeichnet, dass** die Leitung zum Einführen von Oxychlorierungsgas im Innenraum des Reaktorbehälters an der Wand des Reaktorgehäuses mündet.

7. Reaktor nach einem der Ansprüche 1 bis 6, **dadurch gekennzeichnet, dass** die Öffnung nach oben durchbohrt ist und einen Winkel zwischen 0 und 80° im Verhältnis zu einer horizontalen Richtung bildet, vorzugsweise zwischen 0 und 60° im Verhältnis zu einer horizontalen Richtung.

8. Reaktor nach einem der Ansprüche 1 bis 7, **dadurch gekennzeichnet, dass** mindestens ein Teil der Röhren und der Mittel zum Durchfluss von Gas mit den beiden Platten verbunden ist.

9. Verwendung des Reaktors nach einem der vorherigen Ansprüche in einem Verfahren zur katalytischen Reformierung einer Kohlenwasserstoffcharge, bei dem
- ein Strom von Katalysatorkörnern am Kopf der Oxychlorierungszone eingeführt wird,
- ein Strom von Calcinierungsgas über die Leitung zum Einführen von Calcinierungsgas eingeführt wird,
- ein Strom von Oxychlorierungsgas über die Leitung zum Einspritzen von Oxychlorierungsgas eingeführt wird,
- ein Gasstrom am Kopf der Oxychlorierungszone ausgeschieden wird,
- ein Strom von Katalysatorkörnern am Boden der Calcinierungszone ausgeschieden wird.

10. Verwendung nach Anspruch 9, bei der die Katalysatorkörner auf einem porösen Träger abgelagertes Platin umfassen, der Strom von Calcinierungsgas Luft umfasst oder sauerstoffarme Luft und eine Temperatur zwischen 400 °C und 550 °C aufweist, der Strom von Oxychlorierungsgas eine chlorierte Verbindung umfasst und eine Temperatur zwischen 350 °C und 550 °C aufweist.

11. Verfahren zum Erhalt eines Reaktors nach einem der Ansprüche 1 bis 8, bei dem eine Umgestaltung eines bestehenden Reaktors vorgenommen wird, wobei das vorherige System zum Einführen von Oxychlorierungsgas durch die Mischzone ersetzt wird.

## Claims

1. A reactor (1) for continuously regenerating grains of catalyst, composed of a vessel (2) comprising an oxychlorination zone (72) superimposed over a calcining zone (75) provided with a line for introducing gas, **characterized in that** a chamber (80) is disposed between the oxychlorination zone and the calcining zone, the chamber (80) being composed of an internal space located between two plates (81; 82) which are gas tight and impervious to grains of catalyst, a plurality of tubes (85) passing through the chamber (80) to allow grains of catalyst to pass from the oxychlorination zone (72) to the calcining zone (75), a plurality of means (83) passing through the chamber (80) to allow calcining gas to pass from the calcining zone to the oxychlorination zone, the reactor (1) comprising at least one oxychlorination gas injection line (73) opening into the internal space (86) of the chamber (80), each means (83) for the passage of gas comprising at least one orifice (89) communicating with the internal space (86) of the chamber (80), each means (83) for the passage of gas comprising a means (84) for evacuating gas in the oxychlorination zone, the gas evacuation means (84) being permeable to gas and impermeable to grains of catalyst.

2. A reactor according to claim 1, **characterized in that** each gas evacuation means is selected from a bubble cap, a perforated plate and a screen.

3. A reactor according to claim 2, **characterized in that** each gas evacuation means is composed of a vertical tubular screen, the lower end of the tubular screen communicating with the mixing zone, the upper end of the screen being obstructed by a roof.

4. A reactor according to claim 3, **characterized in that** the roof is a cone the peak of which is directed upwardly.

5. A reactor according to one of claims 1 to 4, **characterized in that** the oxychlorination gas injection line opens into the centre of the internal space of the chamber.

6. A reactor according to one of claims 1 to 4, **characterized in that** the oxychlorination gas injection line opens into the internal space of the chamber at the wall of the reactor vessel.

7. A reactor according to one of claims 1 to 6, **characterized in that** the orifice is pierced in an upwardly orientated direction, forming an angle in the range 0° to 80° with respect to a horizontal direction, preferably in the range 0° to 60° with respect to a horizontal direction.

8. A reactor according to one of claims 1 to 7, **characterized in that** at least a portion of the tubes and the gas passage means are integral with the two plates.

9. Use of a reactor in accordance with one of the preceding claims in a process for catalytic reforming of a hydrocarbon feed, in which:
• a stream of grains of catalyst is introduced at the head of the oxychlorination zone;
• a stream of calcining gas is introduced via the calcining gas introduction line;
• a stream of oxychlorination gas is introduced via the oxychlorination gas injection line;
• a stream of gas is evacuated from the head of the oxychlorination zone;
• a stream of grains of catalyst is evacuated from the bottom of the calcining zone.

10. Use according to claim 9, in which the grains of catalyst comprise platinum deposited on a porous support, the stream of calcining gas comprises air or oxygen-depleted air and is at a temperature in the range 400°C to 550°C, the stream of oxychlorination gas comprises a chlorine-containing compound and is at a temperature in the range 350°C to 550°C.

11. A process for obtaining a reactor according to one of claims 1 to 8, in which an existing reactor is remodelled by replacing the old oxychlorination gas injection system with said mixing zone.
